Europäisches Patentamt

European Patent Office

Office européen des brevets

(11) Publication number: **0 275 632 B1**

# EUROPEAN PATENT SPECIFICATION

(45) Date of publication of patent specification: **24.04.91**   (51) Int. Cl.⁵: **F16D 3/26**, B62D 1/18

(21) Application number: **87309283.7**

(22) Date of filing: **21.10.87**

(54) Universal joint assembly for use in a steering wheel assembbly.

(30) Priority: **19.12.86 US 943500**

(43) Date of publication of application:
**27.07.88 Bulletin 88/30**

(45) Publication of the grant of the patent:
**24.04.91 Bulletin 91/17**

(84) Designated Contracting States:
**DE GB IT SE**

(56) References cited:
**DE-C- 226 555**      **FR-A- 374 082**
**FR-A- 1 166 141**    **FR-A- 2 089 579**
**US-A- 1 578 664**    **US-A- 2 740 270**
**US-A- 3 451 228**    **US-A- 4 317 338**

(73) Proprietor: **TELEFLEX INCORPORATED**
**155 S. Limerick Road**
**Limerick Pennsylvania 19468(US)**

(72) Inventor: **Carlson, John A.**
**37 Flintrock Lane**
**Wayne Pennsylvania 19087(US)**

(74) Representative: **Walters, Frederick James et al**
**Urquhart-Dykes & Lord 91 Wimpole Street**
**London W1M 8AH(GB)**

## Description

### TECHNICAL FIELD

This invention relates to a universal joint, and more specifically to a universal joint for use in a vehicle steering assembly.

### BACKGROUND ART

A steering assembly typically includes a steering shaft directly coupled by a spline, or the like, to a steering wheel. Such a straight connection requires no universal joint. It has become desirable to include in steering assemblies the option of tilting the wheel in a vertical plane to adjusted positions for the comfort of the driver. This option requires use of a universal joint for rotation of a steering wheel shaft with respect to the steering shaft when the two shafts are disposed angularly with respect to one another.

One such steering assembly uses a universal joint having a molded or integrated cavity for receiving the wheel shaft. Insertion of the shaft into the cavity is accomplished by sliding each of two cap members along the shaft, one at a time and into the cavity by pivoting the shaft to either side. The caps are secured to the wheel first shaft by a pin which creates a circular end. Manufacture of this type of assembly is difficult with respect to the joint cavity. This type of assembly is shown in US-A- 4,317,338 wherein a molded joint receives multiple parts to comprise a universal joint assembly.

### SUMMARY OF THE INVENTION AND ADVANTAGES

According to the present invention there is provided a universal joint assembly for use in a steering wheel assembly, said assembly comprising; a first shaft having a first universal end, a second shaft having a second universal end, said first universal end including oppositely disposed faces with a pin extending from each of said faces, cap members rotatably disposed on said pin and in facing relationship to said faces for allowing relative rotational movement about the axis of said pin between said first shaft and said cap members, said cap members having a semi-circular periphery away from said faces in a plane containing the axis of said pin, socket members clamped about said second universal end of said second shaft and including a circular pocket disposed about said cap members for limiting movement of said cap members in said plane relative to socket members so that universal movement occurs between said shafts as said circular cap members rotate in said pocket along with said pin and relative rotation occurs about the axis of said pin between said first shaft and said cap members at said faces, fastener means connected between said socket members within said pocket, characterized by said cap members having said semicircular periphery extending beyond said first end and including reliefs extending away from said first end therein for defining a clearance about said fastener for allowing rotational movement of said cap members.

### BRIEF DESCRIPTION OF THE DRAWINGS

Other advantages of the present invention will be readily appreciated as the same becomes better understood by reference to the following detailed description when considered in connection with the accompanying drawings wherein:

FIGURE 1 is a cross-sectional view of the preferred embodiment of the subject invention;

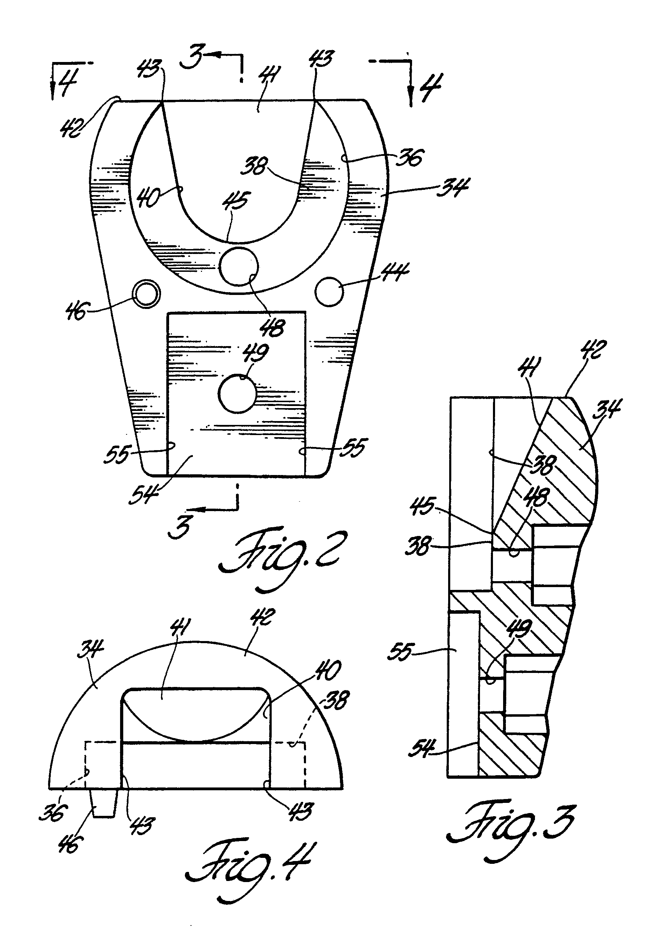

FIGURE 2 is an elevational view of the inside face of one of the halves of the socket;

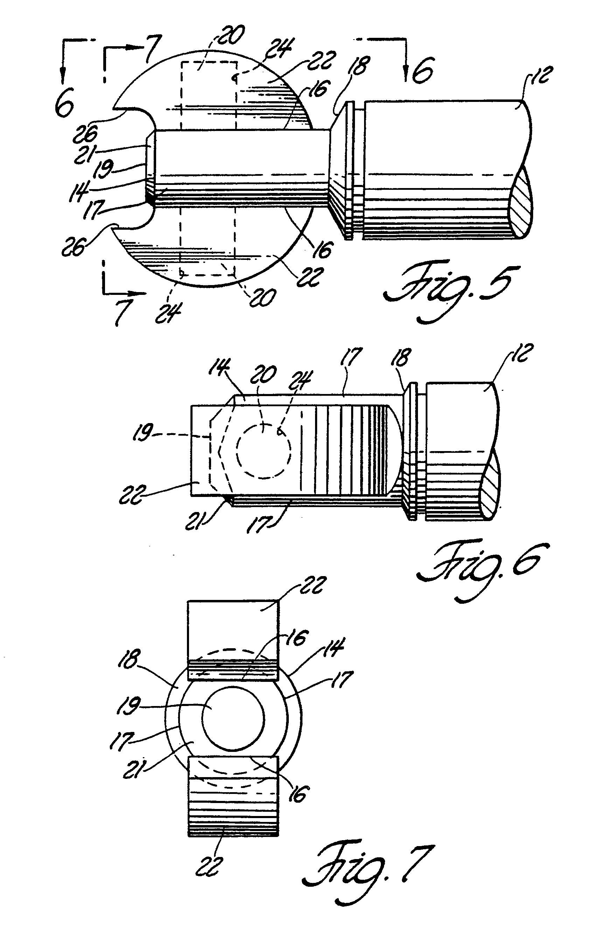

FIGURE 3 is a fragmentary cross-sectional view of the socket taken substantially along lines 3-3 of Figure 2;

FIGURE 4 is an end view of the socket taken substantially along lines 4-4 of Figure 2;

FIGURE 5 is a side view of the first universal end, i.e., the steering shaft end;

FIGURE 6 is a view of the first universal end taken substantially along lines 6-6 of Figure 5; and

FIGURE 7 is an end view of the first universal end taken substantially along lines 7-7 of Figure 5.

### DESCRIPTION OF THE PREFERRED EMBODIMENT

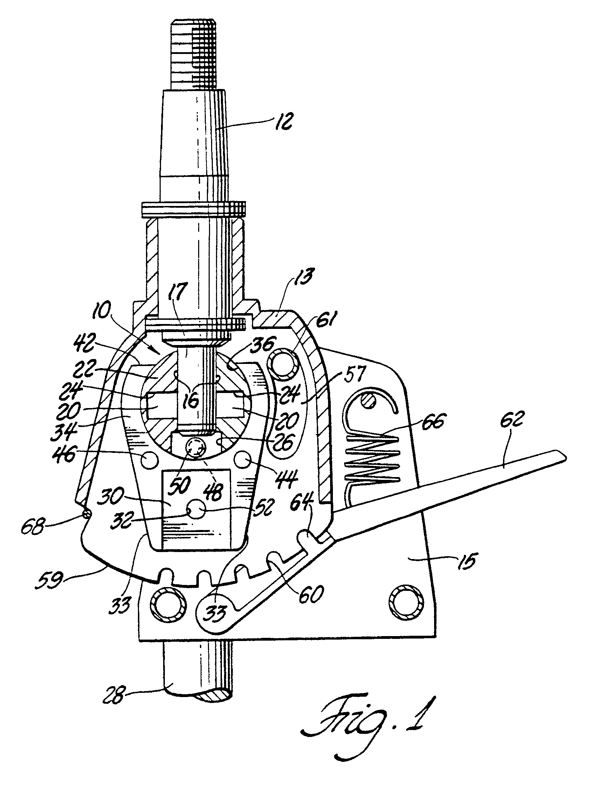

A universal joint assembly for use in a steering wheel assembly is generally shown at 10 in Figure 1.

The assembly 10 includes a first steering or wheel shaft 12 having a first universal end 14. The wheel shaft 12 is rotatably supported in a bracket 13 which is in turn pivotally mounted in a housing 15 for tilting movement about an axis extending through the universal joint 10. The first universal end 14 of shaft 12 includes oppositely disposed flat faces 16 with rounded sides 17 extending between the faces 16. The first end 14 contains a pin hole extending therethrough out to each of the oppositely disposed faces 16 in which a pin 20 is press fit or otherwise fixed, the ends of which extend away from each of the faces 16. The lower portion of end 14 includes an annular frustoconical flange 18 and the circular distal tip 19 is chamfered at 21.

The assembly 10 includes cap members 22 which are semicircular and contain a bore 24 on the diameter thereof and into the cap members 22. In other words, the caps have circular outer peripheries which extend away from and intersect the faces 16 in the plane containing the longitudinal or center axis of the pin 20. The cap members 22 are rotatably disposed on the pin 20 and in facing relationship to the faces 16 for allowing relative rotational movement about the axis of the pin 20 between the first shaft 12 and the cap members 22. The cap members 22 are semicircular away from the faces 16 in the plane containing the axis of the pin 20. The cap members 22 include spaced and parallel flat sides perpendicular to the faces 16. The sides 17 of the first universal end 14 extend laterally outward from the flat sides of the cap members 22. The cap members 22 include reliefs 26 at the distal tip or end 19 of the first shaft 12 for defining a clearance for pivotal movement, explained more fully hereinafter.

The assembly 10 also includes a second or steering shaft 28 having a second universal end 30. The second universal end 30 has an end generally rectangular in cross-section and containing a securing hole 32 extending therethrough. The end 30 is generally rectangular because it has rounded sides 33.

The assembly 10 is characterized by socket members 34 which interconnect the first shaft 12 and the second shaft 28. The socket members 34 define a circular pocket 36 which is disposed about the cap members 22 for limiting movement of the cap members 22 so that universal movement between the first 12 and second 28 shafts occur as the cap members 22 rotate in the circular pocket 36 along with the pin 20. Relative rotation also occurs about the axis of the pin 20 between the first shaft 12 and the cap members 22 at the faces 16. The configuration of each socket member 34 is identical which allows manufacturing to be simple.

The socket members 34 mate in a plane containing the axis of the pin 20. The circular pocket 36 includes flat bottoms 38 in sliding engagement with the flat sides of the cap members 22. The socket members 34 generally define a outwardly flared recess 40 and 41 which extends into the flat bottoms 38 of the circular pocket 36 to accommodate the sides 17 of the first shaft 12 during rotational movement of the cap members 22 in the circular pocket 36 and to accommodate movement of the first shaft 12 about the axis of the pin 20.

The socket members 34 present an upper surface 42 and the circular pocket 36 intersects and terminates on a line 43 at the upper surface 42 on a chord of the circle thereof for retaining the cap members 22 therein. The flared recess 40 and 41 intersects the upper surface 42 at the intersection 43 of the circular pocket 36 and the upper surface 42. The flared recess 40 and 41 includes the side ramps 41 which slope downwardly and inwardly from the upper surface 42 to intersect the bottoms 38 of the pockets 36 on a circular line 45.

The socket members 34 include guide means 44 and 46 for aligning the socket members 34 during assembly 10 and to prevent relative angular movement therebetween. The guide means 44 and 46 include a guide pin 46 disposed laterally of the pocket 36 on each socket member 34 and a guide hole 44 on the opposite side of each socket member 34 for receiving the guide pin 46 of the other socket member 34. The guide pin 46 is disposed in the guide hole 44 of the mating socket member when assembled.

The assembly 10 further includes fastener hole means 48 and 49 and fastener means 50 and 52 for securing the socket members 34 together. The fastener means 50 and 52 includes a first fastener 50 interconnecting and holding the socket members 34 together about the cap members 22. The first fastener 50 extends through the fastener hole 48 at the bottom of the circular pocket 36 and through the opposing bottom 38 thereof. The reliefs 26 in the cap members 22 define a clearance about the first fastener 50 for allowing rotational movement of the cap members 22. The socket members 34 are clamped about the second universal end 30 of the second shaft 28. The socket members 34 include a pocket with flat sides 54 and rounded ends 55 for receiving the end 30 of second shaft 28. The generally rectangular pocket includes the rounded ends 55 complementary with the rounded 33 end 30 of the second shaft 28. The socket members 34 include a second fastener hole 49 extending through the flat sides 54 of the rectangular pocket in the socket members 34. The fastener means 50 and 52 includes a second fastener 52 for independently connecting the socket members 34 to the second shaft 28. The second fastener 52 extends through the second fastener hole 49 and the securing hole 32. The mating rounded side surfaces 33 and 55 extend in the direction of the second fastener 52.

The assembly 10 is easily assembled and is as follows. The pin 20 is inserted within the first shaft 12. The cap members 22 are then placed about the pin 20 against the faces 16. The socket member 34 are then secured about the cap members 22 and secured by the first fastener 50. The second rectangular end 30 of second shaft 28 may then be inserted in the rectangular pocket 54 and secured by the second fastener 52. The historically complex parts are now easily manufactured and assembled. The socket members 34 are identical in shape as are the cap members 22.

The specific embodiment as shown in Fig. 1 is for use as a tilt wheel steering assembly 10. The first shaft 12 is connected to a steering wheel, not shown. The second shaft 28 is connected to the steering gear, also not shown. The bracket 13 surrounds the universal joint assembly 10 adjacent the first shaft 12 and prevents lateral movement of the first shaft 12 with respect to the housing 15 but allows pivotal movement about an axis extending through the universal joint and out of the view of Figure 1. The bracket 13 pivots in an arc concentric with the slot 57 and arcuate bottom 59. A guide pin 61 extends into the arcuate slot 57 from the housing 15. The arcuate bottom 59 of bracket 13 includes notches 60. A lever 62 is pivotally mounted on the housing 15 and includes a tooth 64 for engaging one of the notches 60. The tooth 64 is held in one of the notches 60 by a spring 66 exerting force on the lever 62. The lever 62 may be manually moved out of engagement for pivotally adjusting the first shaft 12 or the steering wheel angularly with respect to the second shaft 28 by releasing the lever 62 which disengages the tooth 64 from a notch 60. The second shaft 28 is always held stationary with the support housing 15 so that the first shaft 12 can pivot. The angular movement accomplishes the tilting of the wheel. A spring 68 constantly urges the bracket 13 to pivot counter clockwise from the original position shown in Figure 1.

## Claims

1. A universal joint assembly (10) for use in a steering wheel assembly (10), said assembly (10) comprising; a first shaft (12) having a first universal end (14), a second shaft (28) having a second universal end (30), said first universal end (14) including oppositely disposed faces (16) with a pin (20) extending from each of said faces (16), cap members (22) rotatably disposed on said pin (20) and in facing relationship to said faces (16) for allowing relative rotational movement about the axis of said pin (20) between said first shaft (12) and said cap members (22), said cap members (22) having a semi-circular periphery away from said faces (16) in a plane containing the axis of said pin (2O), socket members (34) clamped about said second universal end (30) of said second shaft (28) and including a circular pocket (36) disposed about said cap members (22) for limiting movement of said cap members (22) in said plane relative to socket members (34) so that universal movement occurs between said shafts (12, 28) as said circular cap members (22) rotate in said pocket (36) along with said pin (20) and relative rotation occurs about the axis of said pin (20) between said first shaft (12) and said cap members (22) at said faces (16), fastener means (50) connected between said socket members (34) within said pocket (36), characterized by said cap members(22) having said semi-circular periphery extending beyond said first end (14) and including reliefs (26) extending away from said first end (14) therein for defining a clearance about said fastener (50) for allowing rotational movement of said cap members (22).

2. An assembly according to claim 1 further characterized by said cap members (22) including flat sides perpendicular to said faces (16), said circular pocket (36) including flat bottoms (38) in sliding engagement with said flat sides of said cap members (22).

3. An assembly according to claim 1 or claim 2 further characterized by said socket members (34) mating in a plane containing said axis of said pin (20).

4. An assembly according to claim 2 or claim 3 further characterized by said first universal end (14) of said first shaft (12) having sides (17) extending laterally from said flat sides of said cap members (22), said socket members (34) defining an outwardly flared recess (40, 41) extending into the bottoms (38) of said circular pocket (36) to accommodate said sides of said first shaft (12) during rotational movement of said cap members (22) in said circular pocket (36).

5. As assembly according to any of the preceding claims further characterised by said socket members (34) presenting an upper surface (42), said circular pocket (36) intersecting and terminating at said upper surface (42) on a chord of the circle thereof for retaining said cap members (22) therein.

6. An assembly according to claim 5 further characterized by said outwardly flared recess (40, 41) intersecting said upper surface (42) at the intersections (43) of said circular pocket (36) and said upper surface (42).

7. An assembly according to any of the preceding claims further characterized by including a second fastener (52) for independently connecting said socket members (34) to said second shaft (28).

8. An assembly according to any of claims 2 to 7 further characterized by said socket means (34) including a first fastener hole (48) and said first fastener (50) extending through said socket members (34) at the bottoms (38) of said circular pockets (36).

9. An assembly according to any of the preceding claims further characterized by said socket members (34) including guide means (44, 46) for alingning said socket members (34) during assembly and preventing relative angular movement therebetween.

10. An assembly according to any of the preceding claims further characterized by said socket members (34) being identical in configuration.

11. An assembly according to claim 9 or claim 10 further characterized by said guide means (44, 46) including a guide pin (44) disposed laterally of said pocket (36) of each socket member (34) and a guide hole (46) on the opposite side of each socket member (34) for receiving the guide pin (44) of the other socket member (34).

12. An assembly according to any of the preceding claims further characterized by first shaft (12) including a pin hole extending from one of said faces (16) to the other for supporting said pin (20) to extend away from each of said faces (16).

13. An assembly according to any of the preceding claims further characterized by said socket members (34) including a generally rectanugular pocket (54) for receiving said second shaft (28)

14. An assembly according to claim 13 further characterized by said second shaft (28) including a rectangular end (30) and a securing hole (32) extending through said rectangular end (54)

15. An assembly according to claim 14 further characterized by said socket members (34) including second fastener holes (56) extending through said rectangular pocket (54), said second fastener (52) extending through said second fastener holes (56) and said securing hole (32).

16. An assembly according to any of claims 13 to 15 further characterized by said rectangular pocket (54) and said rectanugular end (30) of said second shaft (28) having mating rounded side surfaces (16) extending in the direction of said second fastener (52).

**Revendications**

1. Ensemble (10) formant joint universel pour volant de direction, l'ensemble (10) comportant un premier arbre (12) ayant une première extrémité (14) de joint universel, un second arbre (28) ayant une seconde extrémité (30) de joint universel, la première extrémité de joint universel (14) comportant des faces planes (16) disposées de manière opposée, une clavette (20) s'étendant à partir de chaque face plane (16), des organes de recouvrement (22) montés rotatifs sur la clavette (20) et en vis-à-vis des faces planes (16) pour permettre le mouvement relatif de rotation autour de l'axe de la clavette (20) entre le premier arbre (12) et les organes de recouvrement (22), les organes de recouvrement (22) ayant dans un plan contenant l'axe de la clavette (20) une périphérie semi-circulaire éloignée des faces planes (16), des organes formant douilles (34) serrés autour de la seconde extrémité de joint universel (30) du second arbre (28) et comprenant une cavité circulaire (36) agencée autour des organes de recouvrement (22) pour limiter le mouvement des organes de recouvrement (22) dans ledit plan par rapport aux organes formant douilles (34) de telle façon qu'un mouvement universel se produit entre les arbres (12, 28) lorsque les organes de recouvrement circulaire (22) tournent dans ladite cavité (36) en même temps que la clavette (20) et qu'une rotation relative se produit autour de l'axe de la clavette (20) entre le premier arbre (12) et les éléments de recouvrement (22) au niveau des faces planes (16), des moyens de fixation (50) mutuelle des organes formant douilles (34) étant situés dans la cavité (36), caractérisé en ce que les organes de recouvrement (22) ont une périphérie demicirculaire s'étendant au-delà de la première extrémité (14) et possèdent des évidements (26) s'étendant loin de la première extrémité (14) à l'intérieur de la périphérie pour définir un jeu autour de la fixation (50) pour permettre un mouvement rotatif des organes de recouvrement (22).

2. Ensemble selon la revendication 1, caractérisé en outre en ce que les organes de recouvrement (22) comportent des côtés plats perpendiculaires auxdites faces (16), ladite cavité circulaire (36) comportant des parties inférieures planes (38) en contact avec coulissement avec les côtés plats des organes de recouvrement (22).

3. Ensemble selon la revendication 1 ou 2, caractérisé en ce que les organes formant douilles (34) se raccordent dans un plan contenant l'axe de la clavette (20).

4. Ensemble selon la revendication 2 ou 3, caractérisé en ce que la première extrémité de joint universel (14) du premier arbre (12) comporte des côtés (17) s'étendant latéralement à partir des côtés plats des organes de recouvrement (22), les organes formant douilles (34) définissant une cavité évasée vers l'extérieur (40, 41) s'étendant dans les parties inférieures (38) de la cavité circulaire (36) pour recevoir les côtés du premier arbre (12) pendant le mouvement de rotation des organes de recouvrement (22) dans la cavité circulaire (36).

5. Ensemble selon l'une quelconque des revendications précédentes, caractérisé en ce que les organes formant douilles (34) présentent une surface supérieure (42), la cavité circulaire (36) étant sécante à la surface supérieure (42) et se terminant au niveau de celle-ci selon une corde d'un cercle de celle-ci pour retenir les organes de recouvrement (22) dans celle-ci.

6. Ensemble selon la revendication 5, caractérisé en ce que les cavités évasées vers l'extérieur (40, 41) sont sécantes à la surface supérieure (42) au niveau des intersections (43) de la cavité circulaire (36) et de la surface supérieure (42).

7. Ensemble selon l'une quelconque des revendications précédentes, caractérisé en ce qu'il comporte un second moyen de fixation (52) reliant de manière indépendante les organes formant douilles (34) au second arbre (28).

8. Ensemble selon l'une quelconque des revendications 2 à 7, caractérisé en ce que les moyens formant douilles (34) comportent un premier trou de fixation (48), et un premier élément de fixation (50) s'étendant à travers les organes formant douilles (34) au niveau des parties inférieures (38) des cavités circulaires (36).

9. Ensemble selon l'une quelconque des revendications précédentes, caractérisé en ce que les organes formant douilles (34) comportent des moyens de guidage (44, 46) adaptés pour aligner les organes formant douilles (34) lors de leur assemblage et pour éviter un mouvement angulaire relatif entre ceux-ci.

10. Ensemble selon l'une quelconque des revendications précédentes, caractérisé en ce que les organes formant douilles (34) sont identiques en configuration.

11. Ensemble selon la revendication 9 ou 10, caractérisé en ce que les moyens de guidage (44, 46) comportent une cheville de guidage (44) disposée latéralement par rapport à la cavité (36) de chaque organe formant douille (34) et un trou de guidage (46) situé sur le côté opposé de chaque organe formant douille (34) pour recevoir la cheville de guidage de l'autre organe formant douille (34).

12. Ensemble selon l'une quelconque des revendications précédentes, caractérisé en ce que le premier arbre (12) comporte un trou de clavette s'étendant à partir d'une des faces (16) jusqu'à l'autre face pour recevoir la clavette (20) pour que celle-ci s'étende en s'éloignant de chacune des faces (16).

13. Ensemble selon l'une quelconque des revendications précédentes, caractérisé en ce que les organes formant douilles (34) comportent une cavité (54) de forme générale rectangulaire destinée à recevoir le second arbre (28).

14. Ensemble selon la revendication 13, caractérisé en ce que le second arbre (28) comporte une extrémité rectangulaire (30) et un trou de fixation (32) s'étendant à travers l'extrémité rectangulaire (54).

15. Ensemble selon la revendication 14, caractérisé en ce que les organes formant douilles (34) comportent des seconds trous de fixation (56) s'étendant à travers la paroi de la cavité rectangulaire (54), un second dispositif de fixation (52) s'étendant à travers les seconds trous de fixation (56) et le trou de fixation (32).

16. Ensemble selon l'une quelconque des revendications 13 à 15, caractérisé en ce que la cavité rectangulaire (54) et l'extrémité rectangulaire (30) du second arbre (28) possèdent des surfaces latérales arrondies complémentaires (16) s'étendant dans la direction du second moyen de fixation (52).

**Ansprüche**

1. Universalgelenkanordnung (10) zur Verwendung in einer Lenkradanordnung (10), wobei diese Anordnung (10) folgende Bestandteile umfaßt: Eine erste Welle (12) mit einem ersten Universalende (14), eine zweite Welle (28) mit einem zweiten Universalende (30), wobei das erste Universalende (14) entgegengesetzt angeordnete Flächen (16) mit einem Stift (20) umfaßt, der sich von jeder dieser Flächen (16) aus erstreckt, Kappenelemente (22), die auf dem Stift (20) drehbar und in den Flächen (16) zugekehrter Relation angeordnet sind, um eine relative Drehbewegung um die Achse des Stiftes (20) zwischen der ersten Welle (12) und den Kappenelementen (22) zu ermöglichen, wobei die Kappenelemente (22) in einer Ebene, die die Achse des Stiftes (20) enthält, weg von der Fläche (16) einen halbkreisförmigen Umfang besitzen, Sockelelemente (34), die um das zweite Universalende (30) der zweiten Welle (28) herumgeklemmt sind und eine kreisförmige Ausnehmung (36) aufweisen, die um die Kappenelemente (22) herum angeordnet ist, um die Bewegung der Kappenelemente (22) in der besagten Ebene bezüglich der Sokkelelemente (34) zu begrenzen, so daß eine Universalbewegung zwischen den Wellen (12, 28) auftritt, während die kreisförmigen Kappenelemente (22) zusammen mit dem Stift (20) in der Ausnehmung (36) rotieren und eine relative Rotation um die Achse des Stiftes (20) zwischen der ersten Welle (12) und den Kappenelementen (22) an den Flächen (16) auftritt, wobei Befestigungsmittel (50) zwischen den Sockelelementen (34) in der Ausnehmung (36) verbunden sind, dadurch **gekennzeichnet,** daß sich an den Kappenelementen (22) der halbkreisförmige Umfang über das erste Ende (14) hinauserstreckt, und daß die Kappenelemente Absätze (26) aufweisen, die sich von dem ersten Ende (14) wegerstrecken, um um die Befestigungsmittel (50) herum einen Freiraum zu bilden, um den Kappenelementen (22) eine Rotationsbewegung zu gestatten.

2. Anordnung nach Anspruch 1, weiterhin dadurch **gekennzeichnet,** daß die Kappenelemente (22) flache Seiten aufweisen, die zu den Flächen (16) senkrecht sind, wobei die kreisförmige Ausnehmung (36) flache Böden (38) in gleitendem Eingriff mit den flachen Seiten der Kappenelemente (22) aufweist.

3. Anordnung nach Anspruch 1 oder 2, weiterhin dadurch **gekennzeichnet,** daß die Sockelelemente (34) in einer Ebene zusammenpassen, die die Achse des Stiftes (20) enthält.

4. Anordnung nach Anspruch 2 oder 3, weiterhin dadurch **gekennzeichnet,** daß das erste Universalende (14) der ersten Welle (12) Seiten (17) besitzt, die sich seitlich von den Flachseiten der Kappenelemente (22) erstrecken, wobei die Sockelelemente (34) eine nach außen erweiterte Vertiefung (40, 41) umgrenzen, die sich in die Böden (38) der kreisförmigen Ausnehmung (36) hineinerstreckt, um zu den Seiten der ersten Welle (12) während einer Rotationzbewegung der Kappenelemente (22) in der kreisförmigen Ausnehmung (36) zu passen.

5. Anordnung nach einem der vorhergehenden Ansprüche, weiterhin dadurch **gekennzeichnet,** daß die Sockelelemente (34) eine obere Oberfläche (42) besitzen, wobei die kreisförmige Ausnehmung (36) diese obere Oberfläche (42) schneidet und an ihr in einer Sehne ihres Kreises endet, um in ihr die Kappenelemente (22) zurückzuhalten.

6. Anordnung nach Anspruch 5, weiterhin dadurch **gekennzeichnet,** daß die nach außen erweiterte Vertiefung (40, 41) die obere Oberfläche (42) in den Schnittbereichen (43) der kreisförmigen Ausnehmung (36) und der oberen Oberfläche (42) schneidet.

7. Anordnung nach einem der vorhergehenden Ansprüche, weiterhin dadurch **gekennzeichnet,** daß sie zweite Befestigungzmittel (52) umfaßt, um die Sockelelemente (34) mit der zweiten Welle (28) in unabhängiger Weise zu verbinden.

8. Anordnung nach einem der Ansprüche 2 bis 7, weiterhin dadurch **gekennzeichnet,** daß die Sockelelemente (34) ein erstes Befestigungsloch (48) umfassen und daß sich die ersten Befestigungsmittel (50) durch die Sockelelemente (34) an den Böden (38) der kreisförmigen Ausnehmungen (36) erstrecken.

9. Anordnung nach einem der vorhergehenden Ansprüche, weiterhin dadurch **gekennzeichnet,** daß die Sockelelemente (34) Führungseinrichtungen (44, 46) umfassen, um die Sockelelemente (34) während des Zusammenbauz auszurichten und eine relative Winkelbewegung zwischen ihnen zu verhindern.

10. Anordnung nach einem der vorhergehenden Ansprüche, weiterhin dadurch **gekennzeichnet,** daß die Sockelelemente (34) eine identische Konfiguration besitzen.

11. Anordnung nach Anspruch 9 oder 10, weiterhin dadurch **gekennzeichnet,** daß die Führungseinrichtungen (46, 44) einen Führungsstift (44) umfassen, der seitlich der Ausnehmung (36) eines jeden Sockelelementes (34) angeordnet ist, sowie ein Führungsloch (46) auf der gegenüberliegenden Seite eines jeden Sockelelementes (34) zur Aufnahme des Führungsstiftes (44) des anderen Sockelelementes (34).

12. Anordnung nach einem der vorhergehenden Ansprüche, weiterhin dadurch **gekennzeichnet,** daß die erste Welle (12) ein Stiftloch aufweist, das sich von der einen Fläche (16) zur anderen erstreckt, um den Stift (20) so zu lagern, daß er sich von jeder der Flächen (16) wegerstreckt.

13. Anordnung nach einem der vorhergehenden Ansprüche, weiterhin dadurch **gekennzeichnet,** daß die Sockelelemente (34) eine im wesentlichen rechtwinkelige Ausnehmung (54) zur Aufnahme der zweiten Welle (28) umfassen.

14. Anordnung nach Anspruch 13, weiterhin dadurch **gekennzeichnet,** daß die zweite Welle (28) ein rechtwinkeliges Ende (30) aufweist und daß sich ein Sicherungsloch (32) durch das rechtwinkelige Ende (30) erstreckt.

15. Anordnung nach Anspruch 14, weiterhin dadurch **gekennzeichnet,** daß die Sockelelemente (34) zweite Befestigungslöcher (56) aufweisen, die sich durch die rechtwinkelige Ausnehmung (54) erstrecken, und daß sich die zweiten Befestigungsmittel (52) durch die zweiten Befestigungslöcher (56) und das Sicherungsloch (32) erstrecken.

16. Anordnung nach einem der Ansprüche 13 bis 15, weiterhin dadurch **gekennzeichnet,** daß die rechtwinkelige Ausnehmung (54) und das rechtwinkelige Ende (30) der zweiten Welle (28) zueinander passende abgerundete Seitenoberflächen (16) aufweisen, die sich in Richtung der zweiten Befestigungsmittel (52) erstrecken.

*Fig. 1*

*Fig.2*

*Fig.4*

*Fig.3*

Fig.5

Fig.6

Fig.7